# EUROPEAN PATENT SPECIFICATION

(11) **EP 0 473 283 B1**
(45) Date of publication and mention of the grant of the patent: **05.10.1994**
(21) Application number: 91306722.9
(22) Date of filing: 23.07.1991
(51) Int. Cl.: B60J 10/00

(54) **Reinforcements for flexible strips**
Verstärkungen für flexible Streifen
Renforcements pour bandes flexibles

(30) Priority: 28.08.1990 GB 9018796
(43) Date of publication of application: 04.03.1992
(73) Proprietor: DRAFTEX INDUSTRIES LIMITED, Edinburgh, EH3 6YY, Scotland (GB)
(72) Inventor: Bright, Robert Granville, W-4060 Viersen 1 (DE)
(74) Representative: Foster, David Martyn

(56) References cited:
- EP-A- 0 305 088
- GB-A- 2 181 698
- US-A- 3 145 434
- US-A- 4 310 164
- US-A- 4 830 898

## Description

The invention relates to a generally channel-shaped carrier for reinforcing a channel-shaped flexible strip, comprising in each side wall of the channel a respective series of slots arranged side-by-side along the length of the carrier, the slots being of two different types, each slot through one of the side walls being displaced along the length of the carrier with respect to a respective one of the slots of the same type in the other side wall of the channel.

Such a carrier is known from GB-A-2 181 698. In this carrier the slots of one type are all arranged along one of the side walls of the carrier and the slots of the other type are all arranged along the other side wall of the carrier, and each slot opens into the free edge of the respective side wall. Because the slots in the two side walls are of respectively different types, they can be configured to render the carrier more easily bendable in one direction (with respect to an axis normal to the base of the channel) than in the opposite direction. This is advantageous when the carrier is incorporated into sealing strips for particular sealing applications (such as for sealing around luggage compartment openings in motor vehicle bodies). However, this asymetric bendability of the carrier is disadvantageous in certain other applications. Furthermore, because each of the slots opens into a respective one of the free edges of the channel, the carrier is significantly flexible; this may be disadvantageous in certain applications where a semi-rigid form of carrier is more suitable because of its ability to retain or substantially retain a particular bent configuration. These are the problems which the invention aims to overcome.

Accordingly, the carrier as first set forth above is characterised in that each of the two series of slots includes slots of both said types alternating with each other along the respective side wall, in that each of the slots of one said type is a short slot open to the longitudinally extending free edge of the respective wall and extends in that wall from that edge to terminate in the same wall, and in that each of the slots of the other said type is a respective closed long slot extending from a point within the respective side wall to terminate at a point in the base of the channel.

Metal carriers embodying the invention, and for incorporation in flexible trimming, finishing and sealing strips, will now be described, by way of example only, with reference to the accompanying diagrammatic drawings in which:
Figure 1 is a perspective sectioned view of one of the sealing strips;
Figure 2 is a cross-sectional view of a slightly different form of sealing strip, mounted on a flange;
Figure 3 is a perspective view of one of the carriers;
Figure 4 is a view of the carrier of Figure 3 at a stage during its manufacture;
Figure 5 shows side views of opposite sides of the carrier of Figure 3, illustrating how the two sides are aligned with each other in the carrier; and
Figures 6 and 7 correspond to Figures 3 and 4 but show a modified form of the carrier.

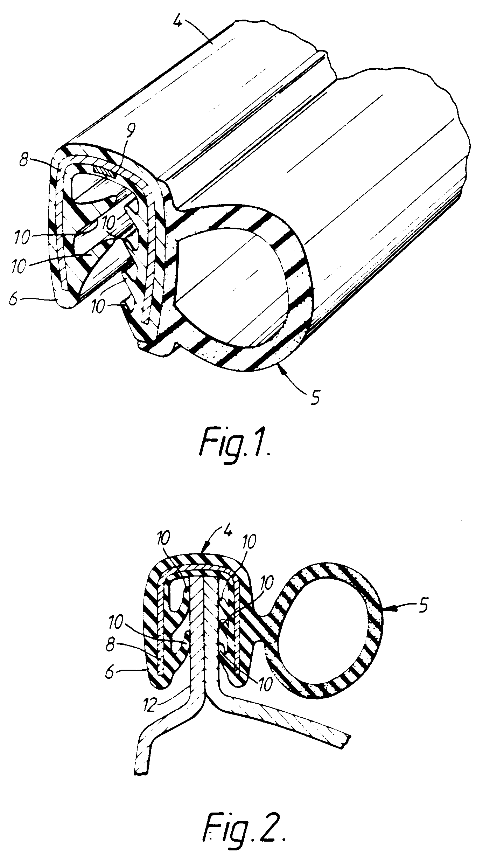

As shown in Figure 1, the sealing strip comprises a channel-shaped gripping part 4 and a tubular sealing part 5. The gripping part 4 is made of channel-shaped extruded plastics material 6 which is extruded over a channel-shaped metal reinforcement or carrier 8 to be described in more detail below. The extrusion process may use a cross-head extruder. A flexible substantially inextensible tape 9 made of synthetic material may be embedded within the plastics material 6 during the extrusion process. The extrusion process is such as to form gripping lips 10 on the inside of the channel and facing each other.

The sealing part 5 is made of extruded rubber material, preferably of cellular construction and is of hollow tubular form. It is secured to the side of the gripping part 4 as by adhesive.

In use, the gripping part 4 is used to secure the sealing strip on a flange surrounding a door or similar opening in a motor vehicle body, the channel of the part 4 embracing the flange so that the lips 10 make tight frictional engagement with the flange and support the sealing part 5 to run around the periphery of the door opening so as to be sealingly compressed by the closing door. The gripping action of the gripping part 4 is enhanced by the resilience of the metal carrier 8.

The tape 9 helps to prevent stretching of the strip, particularly when it is being applied to the flange.

The form of the strip illustrated in Figure 1 is merely by way of example and may be varied in many different ways. For example, there may be more or fewer lips 10 and they may have different shapes. The extruded material of the gripping part 4 and the sealing part 5 may be integral and extruded in a single operation; for example, both may be made of extruded rubber, which again is extruded over the metal carrier 8 using a cross-head extruder.

Figure 2 shows a slightly different form of sealing strip mounted on a flange 12. Parts in Figure 2 corresponding to parts in Figure 1 are similarly referenced. In this case, the extruded material of the gripping part 4 is integrally extruded with the extruded material of the sealing part 5.

In each case, the metal carrier 8 needs to be sufficiently resilient to enable it to assist in firmly retaining the gripping part 4 on the flange. In addition, however, it must be sufficiently flexible to enable the strip to be bent to follow curves in the flange. For example, the door surround will contain bends or corners, often of quite small radius and the carrier must permit the strip to be bent accordingly. In addition, it is desirable in many applications to produce lengths of sealing strip to suit particular door openings, that is, pre-formed with bends and curves in the appropriate places to match the door opening. Preferably, such pre-formed lengths of sealing strip are in the form of closed rings with appropriately pre-formed bends or corners and which are delivered to the vehicle manufacturer ready for assembly (manually or by robot) onto the appropriate flange. To meet such a requirement, the metal carrier 8 has to be sufficiently flexible to enable it to be bent to match the bends or corners but sufficiently rigid to maintain the bends or corners thereafter.

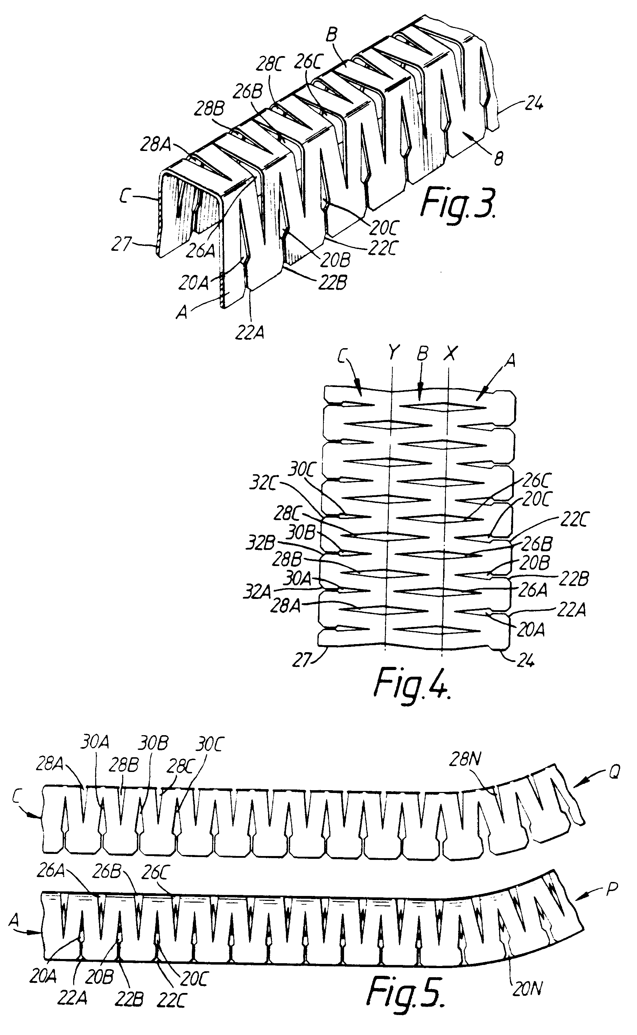

Figure 3 shows a perspective view of one form of the metal carrier. As shown, it is of channel-shaped configuration and provided with a series of side-by-side slots. Each slot is either a long slot or a short slot. Side wall A of the channel is formed with short slots 20A,20B,20C... . Each of these slots opens into a narrow slit 22A,22B,22C..., the slits being formed in and through a narrow marginal portion 24. The short slots 20A,20B,20C terminate approximately three quarters of the distance up the side wall A. A respective long slot 26A,26B,26C... is formed between each pair of short slots 20A,20B,20C..., each such long slot 26A,26B,26C commencing about midway up the side wall A and extending into the base B and terminating more than half way across the base B.

The side wall C is formed with short slots (not visible in Figure 3) corresponding to the short slots 20A,20B and 20C. However, the short slots in the side wall C are staggered in relation to the short slots 20A,20B,20C..., each of the short slots in the side wall C being positioned in alignment with a respective one of the long slots 26A,26B,26C.

Each of the short slots in the side wall C is in alignment with a respective slit similar to the slits 22A,22B,22C... and which extends in and through a marginal portion 27.

Finally, further long slots 28A,28B,28C are provided, these being of the same shape as the long slots 26A,26B,26C; each of the long slots 28A,28B,28C... commences slightly below the middle of the side wall C and extends (as shown) into the base B and terminates more than half way across the base B. Furthermore, each of the long slots 28A,28B,28C... is in alignment with a respective one of the short slots 20A,20B,20C... .

Figure 4 shows a plan view of the carrier 8 of Figure 3 but during a stage in its manufacture when it is in a flat form, and items in Figure 4 corresponding to those in Figure 3 are similarly referenced. In Figure 4, the short slots in the side wall C, which are not visible in Figure 3, are referenced 30A,30B,30C... and their slits corresponding to the slits 22A,22B,22C are referenced 32A,32B,32C... . Lines X and Y in Figure 4 show the lines along which the flat carrier is subsequently bent to form the channel-shape shown in Figure 3.

It will be apparent that the form of carrier illustrated is such that, although the slots and slits formed through each of the side walls A and C are configured similarly, the slots in one side wall are offset in relation to those in the other wall. Thus, Figure 5 shows at A a side view of the side wall A (taken from outside the channel) and of course shows the slots 20A,20B,20C..., the slits 22A,22B,22C... and part of the long slots 26A,26B,26C, and at C shows the corresponding view of the side wall C (viewed in the same direction as side wall A - that is, from the inside of the channel) with its short slots 30A,30B,30C... and its slits 32A,32B,32C..., together with part of the long slots 28A,28B,28C.

The side walls A and C shown in Figure 5 are shown in the exact relationship which they have in the carrier, and this emphasises how the slots through one of the side walls are offset, along the length of the carrier, in relation to the slots through the other side wall. Therefore, when the strip, with the carrier embedded within it, is bent to follow a curve or corner, such bending will be resisted by the asymetric arrangement of the slots in the two side walls. The manner in which the configuration of the carrier changes at such a bend is shown at P and Q in Figure 5. Thus, at such a bend, a slot 20N opens up in side wall A (as do its neighbouring similar slots). Slot 20N, however, is not positioned in alignment with a similarly opening short slot in side C but with part of a long slot 28N - which does not open up during the bending operation. Because of this asymetric arrangement of slots, a certain amount of strain is created in the metal when bends occur. This strain has the effect of making the carrier semi-rigid in form. In other words, although it may be bent to follow curves or corners, once bent it retains its bent shape. It is thus able to preserve a predetermined configuration for a closed ring of sealing strip.

The semi-rigidity of the carrier also comes into operation if the carrier (embedded in a strip) is bent about an axis passing vertically through the inverted base C of the carrier (so as to follow sinuous variations in the path of the flange).

Because of the characteristics of the carrier as described, the tape 9 may not be necessary in order to prevent stretching. Furthermore, the characteristics of the carrier help it to resist stretching during the process in which it is passed through the extruder and also ensure that the strip in which it is embedded has very good clamping efficiency on the mounting flange.

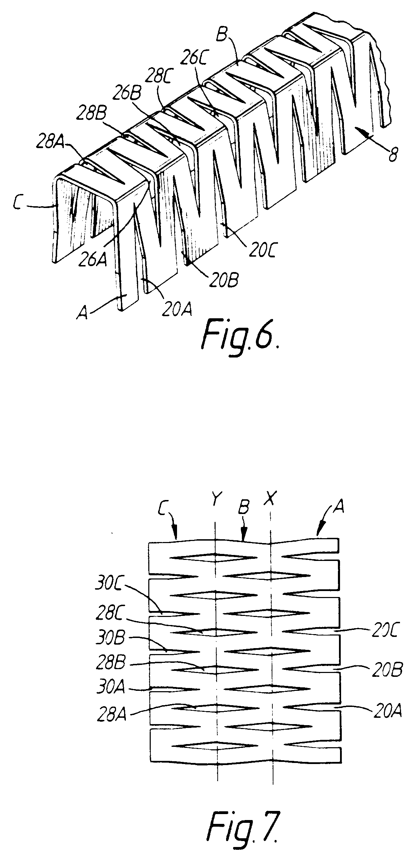

Figures 6 and 7 correspond to Figures 3 and 4 and show a modified design for the carrier in which items corresponding to those in Figures 3 and 4 are correspondingly referenced. In the carrier of Figures 6 and 7, the narrow slits 22A,22B,22C... and 32A,32B,32C... are omitted.

## Claims

1. A generally channel-shaped carrier (8) for reinforcing a channel-shaped flexible strip (4), comprising in each side wall (A,C) of the channel a respective series of slots (20,26;30,28) arranged side-by-side along the length of the carrier (8), the slots being of two different types (20,30;26,28), each slot (20,26) through one of the side walls (A) being displaced along the length of the carrier (8) with respect to a respective one of the slots (30,28) of the same type in the other side wall (C) of the channel, characterised in that each of the two series of slots (20,26;30,28) includes slots of both said types alternating with each other along the respective side wall (A,C), in that each of the slots (20,30) of one said type is a short slot open to the longitudinally extending free edge of the respective wall (A,C) and extends in that wall (A,C) from that edge to terminate in the same wall, and in that each of the slots (26,28) of the other said type is a respective closed long slot extending from a point within the respective side wall (A,C) to terminate at a point in the base (B) of the channel.

2. A carrier according to claim 1, characterised in that each long slot (26,28) extends approximately three-quarters of the distance across the base (B) of the channel.

3. A carrier according to claim 1 or 2, characterised in that each short slot (20,30) is opened into the respective free edge of the corresponding side wall (A,C) via a short slit (22,32) extending through a narrow longitudinally extending marginal edge portion (24,27) of the wall.

4. A carrier according to any preceding claim, characterised in that it is embedded in extruded material (6).

## Patentansprüche

1. Im allgemeinen kanalförmiger Träger (8) zum Verstärken eines kanalförmigen Streifens (4) mit einer in jeder Seitenwand (A,C) des Kanals jeweils längs der Länge des Trägers (8) Seite-an-Seite angeordneten Reihe von Schlitzen (20, 30; 26; 28), wobei die Schlitze aus zwei verschiedenen Schlitztypen (20, 30; 26, 28) bestehen und jeder Schlitz (20, 26) in einer der Seitenwände (A) mit Abstand entlang der Länge des Trägers (8) versetzt zu einem der jeweiligen Schlitze (30, 28) des gleichen Typs in der anderen Seitenwand (C) des Kanals angeordnet ist,
**dadurch gekennzeichnet,**
daß jeder der zwei Reihen von Schlitzen (20, 26; 30, 28) Schlitze beider Typen umfaßt, die sich derart längs der jeweiligen Seitenwand (A, C) abwechselnd erstrecken, daß jeder der Schlitze (20, 30) des einen Typs ein kurzer, zu der sich längst erstreckenden freien Kante der jeweiligen Seitenwand (A, C) hin offener Schlitz ist, der sich in dieser Seitenwand von der Kante aus erstreckt, um in derselben Seitenwand zu enden, und jeder der Schlitze (26, 28) des anderen Typs ein jeweils langer, geschlossener Schlitz ist, der sich von einem Punkt in der jeweiligen Seitenwand (A, C) aus erstreckt, um an einem Punkt in der Basis (B) des Kanals zu enden.

2. Träger nach Anspruch 1, dadurch gekennzeichnet, daß sich jeder lange Schlitz (26, 28) ungefähr über drei Viertel der Strecke der Basis (B) des Kanals erstreckt.

3. Träger nach Anspruch 1 oder 2, dadurch gekennzeichnet, daß jeder kurze Schlitz (20, 30) über einen kurzen Spalt (22, 32), der sich durch einen schmalen längserstreckenden Randbereich (24, 27) der Seitenwand erstreckt, zu der jeweiligen freien Kante der entsprechenden Seitenwand (A, C) hin geöffnet ist.

4. Träger nach einem der Ansprüche 1 bis 3, dadurch gekennzeichnet, daß der Träger (8) in einem extrudierten Material (6) eingebettet ist.

## Revendications

1. Support ayant la forme générale d'une gouttière (8), destiné à renforcer une bande flexible (4) en forme de gouttière, comprenant dans chaque paroi latérale (A, C) de la gouttière, une série respective de fentes (20, 26 ; 30, 28) disposées côte à côte le long de la longueur du support (8), les fentes étant de deux types différents (20, 30 ; 26, 28), chaque fente (20, 26) pratiquée à travers l'une des parois latérales (A) étant déportée selon la longueur du support (8) par rapport à une fente correspondante des fentes (30, 28) du même type formées dans l'autre paroi latérale (C) de la gouttière, caractérisé en ce que chacune des deux séries de fentes (20, 26 ; 30, 28) comprend des fentes des deux types qui alternent entre elles le long de la paroi latérale respective (A, C), en ce que chacune des fentes (20, 30) d'un premier de ces types est une fente courte qui s'ouvre dans le bord libre s'étendant longitudinalement de la paroi respective (A, C) et s'étend dans cette paroi (A, C) en partant de ce bord pour se terminer dans cette même paroi, et en ce que chacune des fentes (26, 28) de l'autre desdits types est une fente longue fermée respective qui s'étend d'un point situé dans la paroi latérale (A, C) respective pour se terminer en un point situé dans la base (a) de la gouttière.

2. Support selon la revendication 1, caractérisé en ce que chaque fente longue (26, 28) s'étend sur à peu près les trois-quarts de la distance en travers de la base (a) de la gouttière.

3. Support selon la revendication 1 ou 2, caractérisé en ce que chaque fente courte (20, 30) s'ouvre dans le bord libre respectif de la paroi latérale (A, C) correspondante par une fissure étroite (22, 32) qui traverse une partie de bord marginale étroite (24, 27) de la paroi qui s'étend longitudinalement.

4. Support selon une quelconque des revendications précédentes, caractérisé en ce qu'il est noyé dans une matière extrudée (6).
